# FASCICULE DE BREVET EUROPEEN

(11) **EP 2 572 316 B1**
(45) Date de publication et mention de la délivrance du brevet: **20.03.2019**
(21) Numéro de dépôt: 11723535.8
(22) Date de dépôt: 29.04.2011
(51) Int. Cl.: G06K 9/00

(54) **PROCÉDÉS D'ENRÔLEMENT ET DE VÉRIFICATION BIOMÉTRIQUE, SYSTÈMES ET DISPOSITIFS ASSOCIÉS**
VERFAHREN FÜR ANMELDUNG UND BIOMETRISCHE ÜBERPRÜFUNG SOWIE ENTSPRECHENDE SYSTEME UND VORRICHTUNGEN
SIGNUP AND BIOMETRIC VERIFICATION METHODS, AND RELATED SYSTEMS AND DEVICES

(30) Priorité: 18.05.2010 FR 1053831
(43) Date de publication de la demande: 27.03.2013
(73) Titulaire: Idemia Identity & Security France, 92400 Courbevoie (FR)
(72) Inventeur: THUILLIER, Cédric, 75015 Paris (FR); CHABANNE, Hervé, 75015 Paris (FR)
(74) Mandataire: Cabinet Plasseraud
(86) Numéro de dépôt international: PCT/FR2011/050979
(87) Numéro de publication internationale: WO 2011/144834

(56) Documents cités:
- WO-A1-2009/011661

## Description

La présente invention concerne la vérification biométrique.

La vérification biométrique s'entend traditionnellement de l'authentification ou de l'identification d'individus, humains ou animaux, à partir de données biométriques, relatives à des caractéristiques d'un ou plusieurs attributs biologiques de ces individus, comme les minuties d'empreintes digitales, une forme générale de doigts de la main, les veines d'une main ou d'un doigt, des caractéristiques de la voix, des caractéristiques de l'iris de l'oeil, etc.

Une telle vérification biométrique utilise conventionnellement une base de données stockant des données biométriques relatives à des individus ayant préalablement fait l'objet d'une phase d'inscription dite "enrôlement" pour se voir délivrer, lors d'une vérification biométrique, un droit quelconque (délivrance d'un permis de conduire, d'un titre de transport, d'une indemnisation, autorisation d'accès à un local, etc.).

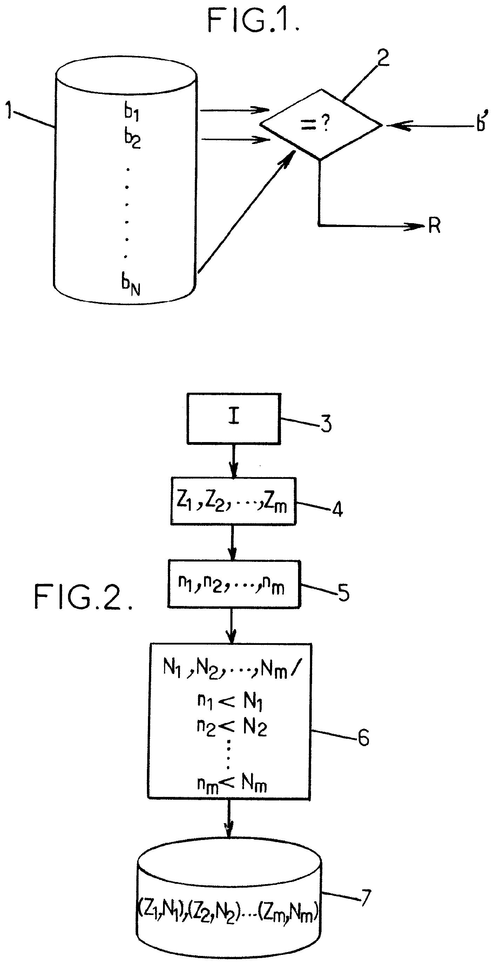

Un exemple très simple de vérification biométrique est illustré sur la figure 1, où l'on distingue une base de données 1 stockant un ensemble de données biométriques b₁, b₂, ..., bₙ relatives à des individus enrôlés.

Ces données biométriques b₁, b₂, ..., bₙ sont par exemple des images représentant tel ou tel attribut biologique d'individus respectifs (par exemple des images d'empreintes digitales, d'iris, etc.), des caractéristiques relatives à un attribut biologique (par exemple un type, une position et une orientation de minuties dans le cas d'empreintes digitales), ou autre.

Avantageusement, une représentation numérique des données biométriques peut être utilisée, de façon à en simplifier la manipulation et à rendre ces données intégrables dans un algorithme cryptographique.

A titre d'exemple non limitatif, les données biométriques b₁, b₂, ..., bₙ stockées dans la base de données 1 peuvent consister chacune en un vecteur numérique, par exemple binaire. De nombreuses façons d'obtenir un vecteur numérique à partir d'informations biométriques sont connues.

Dans l'exemple de la figure 1, la vérification biométrique se passe de la manière suivante relativement à un individu donné. On obtient une donnée biométrique b', par exemple dans sa représentation sous forme de vecteur numérique, de l'individu considéré. Cette donnée b' est comparée à tout ou partie des données b₁, b₂, ..., bₙ stockées dans la base de données 1 (référence 2).

En cas de concordance ou de proximité suffisante, on peut en déduire que l'individu considéré correspond à un individu enrôlé (cas d'une identification) ou à l'individu enrôlé qu'il prétend être (cas d'une authentification). Ce résultat est noté R sur la figure 1.

Une telle vérification biométrique est donc basée sur un modèle inclusif qui tend à retenir un individu enrôlé, dès lors que son attribut biologique fait apparaître des caractéristiques suffisamment proches de celles de l'individu faisant l'objet de la vérification biométrique.

Un tel modèle est susceptible de poser certains problèmes.

En particulier, pour être efficace, il peut requérir de stocker une importante quantité d'informations. A titre d'exemple, si l'on s'intéresse aux minuties d'une empreinte digitale, il peut être nécessaire de stocker le type de ces minuties (fin de crête ou bifurcation), leur position et leur orientation.

De telles informations pourraient permettre de retrouver un individu par reconstruction de son empreinte digitale, notamment par une personne indélicate qui parviendrait à accéder au contenu de la base de données 1. Ceci va à rencontre de la protection de liberté individuelle et de la vie privée.

De plus, le nombre d'opérations à mettre en oeuvre lors la vérification biométrique peut être élevé, ce qui est coûteux en puissance et en temps de calcul. Toujours dans le cas d'une empreinte digitale, la comparaison 2 entre b' et tout ou partie des données b₁, b₂, ..., bₙ stockées dans la base de données 1 peut ainsi nécessiter une comparaison du type, de la position et de l'orientation de chacune des minuties de chaque empreinte digitale testée.

Par ailleurs, dans le cas d'une authentification, la base de données biométrique 1 doit être reliée à une base de données d'identité (par exemple sous forme alphanumérique), de manière à conclure qu'un individu est ou non l'individu enrôlé qu'il prétend être. Un lien 1 pour 1 entre données biométriques et données d'identité stockées dans ces bases de données pourrait permettre à une personne indélicate de retrouver trop facilement la correspondance entre ces deux types de données. Cette personne pourrait se servir de cette correspondance pour usurper l'identité d'individus enrôlés.

Pour surmonter ce problème, il a été proposé d'utiliser un "lien faible" entre une base de données biométrique 1 et une base de données d'identité. Un tel lien faible ne permet pas d'établir une correspondance 1 pour 1 entre données biométriques et données d'identité. Mais il autorise néanmoins une authentification avec un niveau de succès acceptable. La mise en place de cette technique de lien faible est cependant relativement complexe.

On connaît par ailleurs du document WO 2009/011661 un procédé d'enrôlement d'un individu à des fins de vérification biométrique, dans lequel on définit des zones incluant une partie d'un attribut biométrique d'un individu. A partir de ces zones, ce document décrit de créer des vecteurs d'informations sur le contenu de ces zones, par exemple le nombre d'éléments caractéristiques à l'intérieur de chaque zone, et de les stocker à l'intérieur d'une base de données biométriques.

Durant un procédé de vérification subséquent, on calcule un taux de similitude entre le vecteur d'information généré durant l'enrôlement et un vecteur d'information généré de la même manière auprès d'un candidat à une identification ou authentification, puis ce taux de similitude est comparé à un seuil. Si le seuil est dépassé, l'identification ou l'authentification échoue.

Un but de la présente invention est de limiter certains au moins de ces inconvénients.

L'invention propose ainsi un procédé de d'enrôlement d'un individu à des fins de vérification biométrique, comprenant les étapes suivantes :
- acquérir une image d'un attribut biologique dudit individu, ledit attribut biologique incluant un ensemble d'éléments caractéristiques ;
- définir une pluralité de zones incluant une partie au moins dudit attribut biologique, dans lequel ladite pluralité de zones comprend au moins une première zone et une deuxième zone, la première zone étant incluse dans la deuxième zone ;
- stocker dans une base de données biométrique (7) une première information indiquant que le nombre d'éléments caractéristiques inclus dans la première zone est inférieur à un premier entier déterminé respectif et une deuxième information indiquant que le nombre d'éléments caractéristiques inclus dans la deuxième zone est inférieur à un deuxième entier, le deuxième entier étant supérieur au premier entier

Un tel procédé qui ne stocke dans la base de données biométrique que des informations peu précises sur des caractéristiques d'un attribut biologique limite le risque que de telles informations puissent être détournées par une personne indélicate pour retrouver l'identité des individus enrôlés.

Selon des modes de réalisation avantageux qui peuvent être combinés entre eux de toutes les manières envisageables :
- un repère est positionné dans l'image acquise en fonction d'au moins un élément remarquable de l'attribut biologique, et la pluralité de zones est définie relativement audit repère ;
- pour au moins une zone définie, on stocke dans la base de données biométrique au moins une information indiquant que le nombre d'éléments caractéristiques inclus dans ladite zone est nul ; et/ou
- on stocke en outre une identité dudit individu dans une base de données d'identité, des liens étant prévus entre ladite identité stockée dans la base de données d'identité et lesdites première et deuxième informations.

Selon un autre aspect, l'invention propose un procédé de vérification biométrique utilisant une base de données biométrique construite au cours d'un procédé d'enrôlement tel que mentionné ci-dessus. Le procédé de vérification biométrique comprend les étapes suivantes relativement à un individu donné :
- acquérir une image d'un attribut biologique de l'individu donné, ledit attribut biologique incluant un ensemble d'éléments caractéristiques ;
- détecter, dans l'image acquise, au moins une zone correspondant respectivement à au moins une zone définie au cours du procédé d'enrôlement ;
- compter le nombre d'éléments caractéristiques inclus dans ladite zone détectée ;
- conclure à une absence d'identité de l'individu donné avec au moins un individu enrôlé, lorsque l'information stockée dans la base de données biométrique relativement à l'individu enrôlé indique que le nombre d'éléments caractéristiques inclus dans la zone définie est inférieur à un entier déterminé, tandis que le nombre d'éléments caractéristiques inclus dans la zone détectée n'est pas inférieur audit entier déterminé pour l'individu donné.

Une telle vérification biométrique fonctionne selon un modèle exclusif puisqu'elle écarte les individus enrôlés qui présentent une répartition d'éléments caractéristiques différente de l'individu faisant l'objet de la vérification biométrique. Ceci s'oppose au modèle inclusif traditionnel où un individu enrôlé ne devient candidat pour être assimilé à l'individu faisant l'objet de la vérification biométrique qu'à partir du moment où une proximité suffisante entre des données biométriques relatives aux individus est détectée.

Avantageusement, le modèle exclusif peut être utilisé pour faire un premier tri parmi l'ensemble des individus enrôlés, puis le modèle inclusif traditionnel peut ensuite compléter la sélection en ne retenant que le ou les individus enrôlés les plus proches de l'individu faisant l'objet de la vérification biométrique.

L'invention propose aussi un système ou dispositif agencé pour mettre en oeuvre le procédé d'enrôlement et/ou le procédé de vérification biométrique mentionné plus haut.

L'invention propose encore un produit programme d'ordinateur comprenant des instructions de code appropriées pour mettre en oeuvre le procédé d'enrôlement et/ou le procédé de vérification biométrique mentionné plus haut, lorsqu'il est chargé et exécuté sur des moyens informatiques.

D'autres particularités et avantages de la présente invention apparaîtront dans la description ci-après d'exemples de réalisation non limitatifs, en référence aux dessins annexés, dans lesquels :
- la figure 1, déjà commentée, est un schéma illustrant un exemple très simple de vérification biométrique selon l'art antérieur;
- la figure 2 est un schéma illustrant un enrôlement mis en oeuvre selon un exemple de réalisation de l'invention ;
- la figure 3 est un schéma illustrant une image d'un attribut biologique manipulée selon un exemple de réalisation de l'invention ;
- la figure 4 est un schéma illustrant une vérification biométrique mise en oeuvre selon un exemple de réalisation de l'invention.

Un premier aspect de l'invention concerne l'enrôlement d'un ou plusieurs individus à des fins ultérieures de vérification biométrique.

L'enrôlement, relativement à un individu P quelconque, peut se faire par exemple selon les étapes illustrées à la figure 2.

Ainsi, dans une étape 3, une image d'un attribut biologique de l'individu P est acquise. L'attribut biologique considéré peut être de toute nature et de tout type. Il peut par exemple s'agir d'une empreinte digitale, d'une main, de l'iris d'un oeil, du réseau de veines d'un doigt ou d'une main, du visage, de toute combinaison d'attributs biologiques parmi les précédents, ou autre.

Dans tous les cas, l'attribut biologique considéré inclut un ensemble d'éléments caractéristiques. Ces éléments caractéristiques peuvent également être de toute nature et de tout type. Il peut par exemple s'agir de minuties (accidents sur les lignes de crêtes) dans le cas d'une empreinte digitale, de la forme générale dans le cas d'une main ou du visage, de la texture de l'iris d'un oeil, de points remarquables dans la géométrie du réseau de veines, ou autre.

L'image de l'attribut biologique considéré est acquise à l'aide d'un moyen approprié. Un appareil photographique ou une caméra, éventuellement intégré à un capteur biométrique approprié, peut par exemple être utilisé.

Une fois l'image acquise, on y définit une ou plusieurs zones Z₁, ..., Zₘ m étant un entier quelconque (étape 4). Chacune de ces zones inclut une partie au moins de l'attribut biologique considéré.

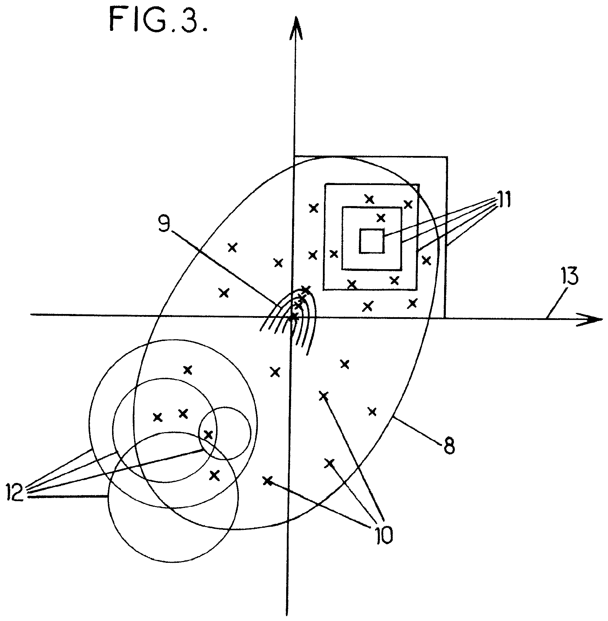

Dans l'exemple non limitatif illustré sur la figure 3, on considère l'image d'une empreinte digitale, dont seul le contour 8 et des portions de lignes de crêtes centrales ont été représentées par souci de clarté. Une telle empreinte digitale inclut un ensemble de lignes de crêtes, dont les fins de crête et les bifurcations constituent des minuties 10 (schématisées par des croix sur la figure 3).

Des zones 11 et 12, incluant chacune une partie de l'empreinte digitale, sont définies dans l'image I de la figure 3. La définition de tout ou partie de ces zones peut se faire en tenant compte de la géométrie et/ou de la position de l'empreinte digitale dans l'image acquise I.

A cet effet, un repère peut avantageusement être positionné dans l'image I, par exemple en fonction d'au moins un élément remarquable de l'attribut biologique considéré.

Dans l'exemple illustré à la figure 3, où l'attribut biologique consiste en une empreinte digitale, l'élément remarquable est par exemple le centre morphologique 9 ("core" en anglais) de l'empreinte digitale. Des techniques de détection d'un tel centre morphologique à partir d'une l'empreinte digitale sont bien connues et peuvent être utilisées dans le cadre de la présente invention. On peut par exemple se référer sur ce point aux publications suivantes : "Détection of cores in fingerprints with improved dimension réduction," de A. M. Bazen et R. N. J. Veldhuis, 4th IEEE Bénélux Signal Processing Symposium (SPS-2004), Hilvarenbeek, The Netherlands, 2004, pp. 41-44, ou "Systematic methods for the computation of the directional fields and singular points of fingerprints" de A. M. Bazen et S. H. Gérez, IEEE Trans. Pattern Anal. Mach. Intell., vol. 24, no. 7, pp. 905-919, 2002.

Un repère 13 peut alors être positionné en tenant compte de ce centre morphologique 9, par exemple en plaçant son origine au niveau du centre morphologique et/ou ses axes dans une direction dépendant d'une orientation du centre morphologique. D'autres façons de positionner un repère dans l'image I sont envisageables, comme cela apparaîtra à l'homme du métier.

Lorsque l'attribut biologique considéré n'est pas une empreinte digitale, d'autres types d'éléments remarquables peuvent être utilisés pour positionner un repère dans l'image acquise I. On peut par exemple penser à la pupille dans le cas d'un iris de l'oeil, du nez dans le cas d'un visage, d'un centre géométrique dans le cas d'une main, ou autre.

Les zones Z₁, ..., Zₘ, peuvent avantageusement être définies par rapport au repère ainsi positionné. De cette façon, les zones ne sont pas dépendantes des conditions d'acquisition de l'image I. Par exemple, les zones peuvent être placées de la même façon vis-à-vis de l'empreinte digitale, que l'image de cette dernière ait été acquise pour un doigt placé d'une façon attendue ou bien avec une ou plusieurs translations et/ou rotations par rapport à une position attendue.

Dans l'exemple de la figure 3, deux ensembles de zones sont définis sur l'image de l'empreinte digitale.

Un premier ensemble de zones 1 1 est défini relativement au repère 13, dans un cadran supérieur droit de l'empreinte digitale. Les zones 11 sont au nombre de quatre. Elles sont de forme carrée ou rectangulaire et sont incluses les unes dans les autres, de manière concentrique.

Un deuxième ensemble de zones 12 est défini dans une portion inférieure gauche de l'empreinte digitale. Ces zones 12 sont également au nombre de quatre. Elles sont de forme circulaire ou elliptique et ont un recouvrement au moins partiel pour certaines d'entre elles.

On comprendra cependant qu'il ne s'agit là que d'un exemple illustratif. D'autres types de zones, avec des formes et/ou des positions éventuellement différentes, sont bien sûr envisageables, comme cela apparaîtra à l'homme du métier.

On considère par ailleurs le nombre nᵢ, n₂, ..., nₘ d'éléments caractéristiques inclus dans la zone définie respective Z₁, Z₂, ..., Zₘ (étape 5). Dans l'exemple de la figure 3, le nombre de minuties 10 dans les zones 1 1 , en partant de la plus petite à la plus grande, est respectivement de 0, 1 , 6 et 15. Le nombre de minuties 10 dans les zones 12 est respectivement de 1, 3, 1 et 5.

Un ensemble d'entiers N₁, N₂, ..., Nₘ peut être défini de façon que les nombres ni, nm d'éléments caractéristiques inclus dans la zone définie respective Z₁, Z₂, ..., Zₘ leur soient inférieurs (i.e. strictement inférieurs ou égaux) respectivement. Pour simplifier, on peut écrire par convention que N₁, N₂, ..., Nₘ sont tels que n₁<N₁, n₂<N₂, ..., et nₘ<Nₘ (étape 6).

Ainsi, les entiers N₁, N₂, ..., Nₘ peuvent par exemple prendre les valeurs 0, 1 , 6 et 15 dans le cas des zones 1 1 , et 1 , 1 , 3 et 5 dans le cas des zones 12.

On note que l'entier relatif à la plus petite zone 1 1 est égal à 0. On caractérise donc cette zone par une absence de minutie. Ceci va à encontre de la philosophie traditionnelle de l'enrôlement, qui vise plutôt à établir la présence et la nature d'éléments biométriques, plutôt que leur absence. Cette représentation "négative" s'étend également, d'une certaine façon, aux entiers N₁, N₂, ..., Nₘ strictement supérieurs à 0, puisque les zones correspondantes peuvent être définies comme n'incluant pas plus qu'un nombre déterminé d'éléments caractéristiques.

Dans un mode de réalisation avantageux, les zones Z₁, Z₂, ..., Zₘ sont définies en relation avec les entiers N₁, N₂, ..., Nₘ. Par exemple, les zones 1 1 emboîtées de la figure 3 pourraient être définies de manière à consister en les plus grandes zones dans le cadran supérieur droit de l'empreinte digitale incluant un nombre de minuties 10 inférieur aux entiers 0, 1, 6 et 15 respectivement. Dans ce cas, les zones Z₁, Z₂, ..., Zₘ obtenues pourraient différer assez largement d'une empreinte digitale à une autre.

L'enrôlement de l'individu P se termine par le stockage dans une base de données biométrique d'une information indiquant que le nombre n₁, n₂, ..., nₘ d'éléments caractéristiques inclus dans la zone Z₁, Z₂, ..., Zₘ respective est inférieur à N₁, N₂, ..., Nₘ respectivement (étape 7).

L'information stockée peut consister en une identification de chaque zone Z₁, Z₂, ..., Zₘ en association avec l'entier N₁, N₂, ..., Nₘ correspondant, comme illustré sur la figure 2.

Elle peut cependant être simplifiée, par exemple lorsqu'il existe d'autres façons d'identifier les zones Z₁, Z₂, ..., Zₘ et/ou les entiers N₁, N₂, ..., Nₘ. Si, par exemple, les zones Z₁, Z₂, ..., Zₘ sont définies de la même façon pour tous les individus enrôlés, le stockage des seuls entiers N₁, N₂, ..., Nₘ peut suffire. De même, si les entiers Ni, N2, ..., Nm sont communs à tous les individus enrôlés (par exemple parce que les zones Z₁, Z₂, ..., Zₘ sont construites au cas par cas pour présenter un nombre d'éléments caractéristiques inférieurs respectivement à des entiers N₁, N₂, ..., Nₘ prédéterminés), le stockage d'informations identifiant les zones Image available on "Original document" peut suffire. Dans tous les cas, l'information stockée dans la base de données biométrique doit permettre de comprendre que le nombre d'éléments caractéristiques inclus dans les zones Z₁, Z₂, ..., Zₘ est inférieur aux entiers N₁, N₂, ..., Nₘ respectivement.

Une base de données biométrique construite de cette façon est très intéressante car elle ne dévoile que peu d'informations sur les individus enrôlés. En particulier, le fait de savoir que le nombre d'éléments caractéristiques dans certaines zones d'un attribut biologique est inférieur à un entier déterminé renseigne beaucoup moins qu'une description précise de ces éléments caractéristiques, comme un type, une position et une orientation de chacune des minuties d'une empreinte digitale par exemple.

Même si elle avait accès à une base de données biométrique de ce genre, une personne indélicate ne pourrait pas identifier sans ambiguïté les individus enrôlés à partir des informations qui y sont stockées. La préservation de la liberté individuelle et de la vie privée des individus enrôlés est donc mieux assurée que dans l'art antérieur mentionné en introduction.

Par ailleurs, une base de données biométrique construite comme décrit ci-dessus ne dévoilant que peu d'informations sur les individus enrôlés, elle peut être reliée à une base de données d'identité (par exemple alphanumérique). Le lien entre les données de ces deux bases de données peut être un lien fort, par exemple une relation 1 pour 1, chaque ensemble de données biométriques relatives à un individu étant associé à une identité respective. A titre d'exemple, l'individu P peut ainsi voir son identité stockée dans la base de données d'identité, un lien (tel qu'un pointeur) étant prévu entre cette identité et les informations stockées dans la base de données 7 relativement à P.

On évite ainsi la complexité de la technique du lien faible mentionnée en introduction, sans pour autant permettre à une personne indélicate de connaître une correspondance précise entre biométrie et identité des individus enrôlés.

Un deuxième aspect de la présente invention concerne la vérification biométrique, faisant suite à l'enrôlement d'un ou plusieurs individus selon les principes exposés plus haut.

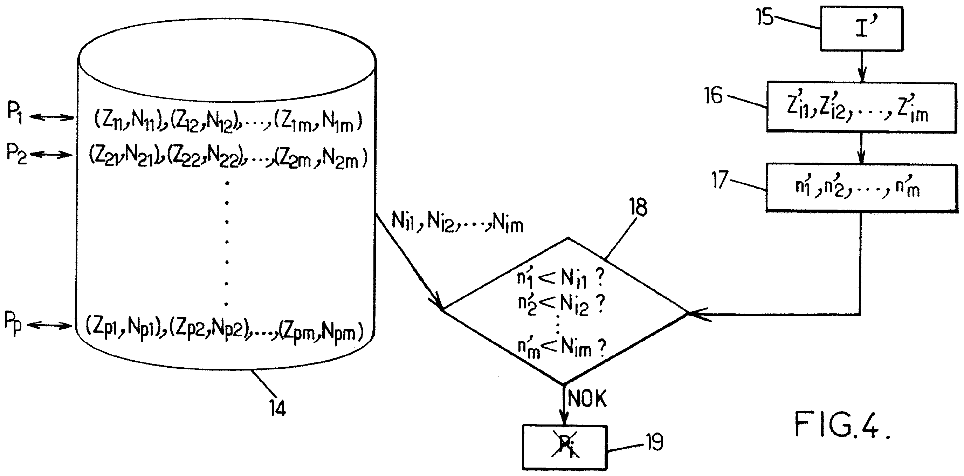

Un exemple de vérification biométrique est décrit ci-après en référence à la figure 4, relativement à un individu P'.

La base de données 14 utilisée pour la vérification biométrique est construite selon les principes exposés plus haut relativement à un ensemble d'individus enrôlés P₁, P₂, ..., Pₚ, p étant un entier quelconque. De façon similaire à la base de données 7, la base de données 14 stocke ainsi des informations par exemple de type (Zⱼ₁, Nⱼ₁), (Zⱼ₂, Nⱼ₂), ..., (Zⱼₘ, Nⱼₘ) avec j allant de 1 à p et identifiant les individus enrôlés. D'autres types d'informations peuvent être stockées dans la base de données 14, comme décrit plus haut en référence à la figure 2.

Lorsque l'individu P' se présente pour une vérification biométrique, une image d'un de ses attributs biologiques incluant un ensemble d'éléments caractéristiques est acquise (étape 15). L'attribut biologique et les d'éléments caractéristiques considérés sont avantageusement conformes à ceux utilisés dans la phase d'enrôlement, bien que des variantes puissent être envisagées.

Le mode d'acquisition de l'image I' peut être identique ou similaire à celui utilisé lors de l'enrôlement pour acquérir l'image I. Le même type, voire le même exemplaire, de dispositif d'acquisition peut par exemple être utilisé.

A l'étape 16, on détecte, dans l'image acquise I', au moins une zone correspondant à au moins une zone définie lors de d'enrôlement.

Par exemple, si un même ensemble de zones Zᵢ₁, Zᵢ₂, ..., Zᵢₘ a été défini pour tous les individus enrôlés, un ensemble de zones identiques ou similaires (par exemple à des ajustements près, comme des translations, des rotations, des alignements dans l'image, ou autre) est détecté dans l'image I'.

Si, au contraire, des ensembles de zones distincts ont été définis selon les individus au cours de l'enrôlement, des ensembles de zones distincts correspondants sont détectés dans l'image I' en fonction des entrées considérées dans la base de données biométrique 14. A titre d'exemple, si à un instant donné de la vérification biométrique, on cherche à tester une identité (ou absence d'identité) entre l'individu P' et l'individu préalablement enrôlé P- on détecte, dans l'image I', un ensemble de zones Zᵢ₁, Zᵢ₂, ..., Zᵢₘ correspondant à l'ensemble de zones Zᵢ₁, Zᵢ₂, ..., Zᵢₘ définies relativement à l'individu Pᵢ₁ etc. A cet effet, une indication des zones Zᵢ₁, Zᵢ₂, ..., Zᵢₘ est par exemple lue dans la base de données biométrique 14.

A titre illustratif, les zones Zᵢ₁, Zᵢ₂, ..., Zᵢₘ ainsi détectées dans l'image pourraient par exemple identiques ou similaires aux zones 11 et 12 de la figure 12.

On notera que, si les zones Zᵢ₁, Zᵢ₂, ..., Zᵢₘ ont été définies, lors de l'enrôlement, à l'aide d'un repère positionné sur l'empreinte digitale en fonction d'un élément remarquable de celle-ci, les zones Z'ᵢ₁, Z'ᵢ₂, ..., Z'ᵢₘ peuvent être détectées de façon similaire sur l'image I'. De cette façon, une orientation et/ou un positionnement différents de l'empreinte digitale dans les images I et I' n'empêchent pas d'obtenir des zones comparables dans les deux cas.

Le nombre n'₁, n'₂, ..., n'ₘ d'éléments caractéristiques inclus dans les zones Z'ᵢ₁, Z'ᵢ₂, ..., Z'ᵢₘ détectées est alors compté à l'étape 17. Dans le cas d'une empreinte digitale, on compte par exemple le nombre de minuties dans chaque zone détectée.

A l'étape 18, les nombres n'₁, n'₂, ..., n'ₘ obtenus relativement aux zones Z'ᵢ₁, Z'ᵢ₂, ..., Z'ᵢₘ sont avantageusement comparés respectivement aux entiers Nᵢ₁, Nᵢ₂, ..., Nᵢₘ stockés dans la base de données biométrique 14 pour l'individu Pᵢ.

Dans le cas d'une authentification, les données relatives aux zones Zᵢ₁, Zᵢ₂, ..., Zᵢₘ et/ou aux entiers Nᵢ₁, Nᵢ₂, ..., Nᵢₘ correspondant à l'individu Pᵢ, sont par exemple obtenues après que cet individu a décliné son identité et que cette dernière a été retrouvée dans une base de données d'identité des individus enrôlés, la base de données d'identité ayant un lien fort avec la base de données biométrique 14 (par exemple une correspondance 1 pour 1 entre les ensembles de données stockés, comme décrit plus haut).

Au cours de l'étape 18, il est par exemple vérifié si les nombres n'₁, n'₂, ..., n'ₘ sont inférieurs aux entiers Nᵢ₁, Nᵢ₂, ..., Nᵢₘ.

Si ce n'est pas le cas, par exemple parce qu'un seul ou plusieurs nombres parmi n'₁, n'₂, ..., n'ₘ sont strictement supérieurs aux entiers respectifs Nᵢ₁, Nᵢ₂, ..., Nᵢₘ (alors que les nombres n₁, n₂, ..., nₘ d'éléments caractéristiques dans l'attribut biologique de P_{I} sont tous inférieurs aux entiers respectifs Nᵢ₁, Nᵢ₂, ..., Nᵢₘ selon l'information stockée dans la base de données biométrique 14), cela est interprété comme le fait que la répartition des minuties diffère dans les empreintes digitales des individus P' et Pᵢ. Il en est conclu que P' ne peut être assimilé à l'individu Pᵢ. Il y a absence d'identité entre P' et Pᵢ. Autrement dit, Pᵢ ne constitue pas un candidat susceptible d'avoir la même identité que P. Cette possibilité est donc rejetée (étape 19).

Dans le cas d'une authentification, on peut ainsi conclure que P' n'est pas l'individu Pᵢ qu'il prétend être. Dans le cas d'une identification, les mêmes étapes 16-19 peuvent se poursuivre vis-à-vis d'un autre individu enrôlé Pk, avec k différent de i, tant qu'il n'a pas été trouvé au moins un candidat potentiel (c'est-à-dire tant que les individus enrôlés testés sont rejetés).

On comprendra qu'une telle vérification biométrique est donc basée sur un modèle exclusif qui tend à rejeter un individu enrôlé comme candidat potentiel, dès lors que les restrictions posées sur la répartition d'éléments caractéristiques de son attribut biologique ne sont pas satisfaites par l'attribut biologique de l'individu faisant l'objet de la vérification biométrique. Ceci tranche avec le modèle inclusif traditionnel tel que présenté en introduction.

Le modèle exclusif mis en oeuvre par la vérification biométrique selon la présente invention peut s'avérer particulièrement efficace. Par exemple, il peut suffire qu'une zone (e.g. la plus petite zone 1 1 dans l'exemple de la figure 3) ou bien un nombre restreint de zones de l'attribut biologique considéré possède un nombre d'éléments caractéristiques supérieur au nombre maximal fixé pour un individu enrôlé, pour conclure à une absence d'identité avec ce dernier. Par opposition, la comparaison traditionnelle (matching) entre deux empreintes digitales nécessite typiquement de comparer le type, la position et l'orientation d'un nombre suffisant de minuties, ce qui peut représenter un d'opérations très conséquent.

Selon un mode de réalisation avantageux de l'invention, l'enrôlement permet d'obtenir, outre les informations stockées dans la base de données biométrique 14 comme décrit plus haut, d'autres informations relatives à des éléments caractéristiques d'attributs biologiques d'individus enrôlés. Ces informations sont par exemple des données biométriques traditionnelles, comme des informations relatives à des minuties (e.g. type, position, orientation) dans le cas d'empreintes digitales, ou autres. Ces données biométriques peuvent être stockées dans la base de données biométrique 14, aux côtés des données présentées plus haut, ou bien dans une autre base de données biométrique.

Dans ce mode de réalisation, les étapes de vérification biométrique décrites en référence à la figure 4 sont mises en oeuvre au cours d'une première phase, pour exclure rapidement un certain nombre d'individus enrôlés. Puis une phase ultérieure de comparaison est mise en oeuvre. Cette phase peut avantageusement être limitée aux individus enrôlés non encore exclus lors de la première phase. Cette comparaison (matching) peut utiliser le modèle inclusif traditionnel de vérification biométrique, mais sur un panel d'individus enrôlés avantageusement restreint.

A titre d'exemple, elle peut comprendre une comparaison entre au moins une information relative à des éléments caractéristiques d'un attribut biologique de l'individu faisant l'objet de la vérification biométrique avec la ou les informations correspondantes, c'est-à-dire les données biométriques, stockées lors de l'enrôlement.

Un tel mode de réalisation peut permettre une vérification biométrique avec environ le même niveau de fiabilité que dans le cas traditionnel, mais avec un temps de convergence réduit.

L'enrôlement et la vérification biométrique selon l'invention peuvent chacun être réalisé à l'aide d'un système ou d'un dispositif comprenant des unités appropriées à cet effet. Ce système ou dispositif peut par exemple consister en un terminal de capture biométrique associé à un module de traitement de données. Il peut être commun à l'enrôlement et à la vérification biométrique. En variante, des systèmes ou dispositifs distincts peuvent être utilisés pour ces deux procédures. Tout ou partie des opérations d'enrôlement et de vérification biométrique mentionnées plus haut peuvent être mises en oeuvre à l'aide d'au moins un programme d'ordinateur comprenant des instructions appropriées, lorsqu'il est chargé et exécuté sur des moyens informatiques.

## Revendications

1. Procédé d'enrôlement d'un individu à des fins de vérification biométrique, comprenant les étapes suivantes :
- acquérir une image (I) d'un attribut biologique dudit individu, ledit attribut biologique incluant un ensemble d'éléments caractéristiques (10) ;
- définir, dans l'image acquise, une pluralité de zones (Z₁,Z₂,...,Zₘ ; 11,12) incluant une partie au moins dudit attribut biologique, dans lequel ladite pluralité de zones (Z₁,Z₂,...,Zₘ ; 11,12) comprend au moins une première zone et une deuxième zone, la première zone étant incluse dans la deuxième zone ;
- stocker dans une base de données biométrique (7) une première information indiquant que le nombre d'éléments caractéristiques inclus dans la première zone est inférieur à un premier entier et une deuxième information indiquant que le nombre d'éléments caractéristiques inclus dans la deuxième zone est inférieur à un deuxième entier, le deuxième entier étant supérieur au premier entier.

2. Procédé selon la revendication 1, dans lequel un repère (13) est positionné dans l'image (I) acquise en fonction d'au moins un élément remarquable (9) de l'attribut biologique, et dans la pluralité de zones (11) est définie relativement audit repère.

3. Procédé selon l'une des revendications 1 et 2, dans lequel, pour au moins une zone (11) définie, on stocke dans la base de données biométrique (7) au moins une information indiquant que le nombre d'éléments caractéristiques inclus dans ladite zone est nul.

4. Procédé selon l'une des revendications 1 à 3, comprenant en outre de stocker une identité dudit individu dans une base de données d'identité, des liens étant prévus entre ladite identité stockée dans la base de données d'identité et lesdites première et deuxième informations.

5. Procédé de vérification biométrique utilisant une base de données biométrique (14) construite au cours d'un procédé d'enrôlement selon l'une quelconque des revendications précédentes, le procédé de vérification biométrique comprenant les étapes suivantes relativement à un individu donné (P') :
- acquérir une image (I') d'un attribut biologique de l'individu donné, ledit attribut biologique incluant un ensemble d'éléments caractéristiques ;
- détecter, dans l'image acquise, au moins une zone (Z'ᵢ₁,Z'ᵢ₂,...,Z'ᵢₘ) correspondant respectivement à au moins une zone (Zᵢ₁,Zᵢ₂,...,Zᵢₘ) définie au cours du procédé d'enrôlement ;
- compter le nombre (n'₁,n'₂,...,n'ₘ) d'éléments caractéristiques inclus dans ladite zone détectée ;
- conclure à une absence d'identité de l'individu donné avec au moins un individu enrôlé (Pᵢ), lorsque l'information stockée dans la base de données biométrique relativement à l'individu enrôlé indique que le nombre d'éléments caractéristiques inclus dans la zone définie est inférieur à un entier (Nᵢ₁,Nᵢ₂,...,Nᵢₘ) déterminé, tandis que le nombre d'éléments caractéristiques inclus dans la zone détectée n'est pas inférieur audit entier déterminé pour l'individu donné.

6. Procédé selon la revendication 5, dans lequel une base de données biométrique (14) stocke en outre d'autres informations relatives à des éléments caractéristiques (10) d'attributs biologiques d'individus enrôlés, et dans lequel la vérification biométrique comprend en outre une phase ultérieure de comparaison entre au moins une information correspondante relative à des éléments caractéristiques d'un attribut biologique de l'individu donné avec au moins une information stockée dans la base de données biométrique relativement à au moins un individu pour lequel il n'a pas été préalablement conclu à une absence d'identité avec l'individu donné.

7. Système ou dispositif agencé pour mettre en oeuvre un procédé d'enrôlement d'un individu à des fins de vérification biométrique selon l'une quelconque des revendications 1 à 4, le système ou dispositif comprenant :
- une unité d'acquisition pour acquérir une image (I) d'un attribut biologique dudit individu, ledit attribut biologique incluant un ensemble d'éléments caractéristiques (10) ;
- une unité de définition pour définir, dans l'image acquise, une pluralité de zones (Z₁,Z₂,...,Zₘ ; 11,12) incluant une partie au moins dudit attribut biologique, dans lequel ladite pluralité de zones (Z₁,Z₂,...,Zₘ ; 11,12) comprend au moins une première zone et une deuxième zone, la première zone étant incluse dans la deuxième zone ;
- une base de données biométrique (7) pour stocker une première information indiquant que le nombre d'éléments caractéristiques inclus dans la première zone est inférieur à un premier entier et une deuxième information indiquant que le nombre d'éléments caractéristiques inclus dans la deuxième zone est inférieur à un deuxième entier, le deuxième entier étant supérieur au premier entier.

8. Système agencé pour mettre en oeuvre un procédé de vérification biométrique selon la revendication 5 ou 6, le système ou dispositif comprenant, relativement à un individu donné (P') :
- une unité d'acquisition pour acquérir une image (I') d'un attribut biologique de l'individu donné, ledit attribut biologique incluant un ensemble d'éléments caractéristiques ;
- une unité de détection pour détecter, dans l'image acquise, au moins une zone (Z'ᵢ₁,Z'ᵢ₂,...,Z'ᵢₘ) correspondant respectivement à au moins une zone (Zᵢ₁,Zᵢ₂,...,Zᵢₘ) définie au cours du procédé d'enrôlement ;
- une unité de comptage pour compter le nombre (n'₁,n'₂,...,n'ₘ) d'éléments caractéristiques inclus dans ladite zone détectée ;
- une unité décisionnelle pour conclure à une absence d'identité de l'individu donné avec au moins un individu enrôlé (Pᵢ), lorsque l'information stockée dans la base de données biométrique relativement à l'individu enrôlé indique que le nombre d'éléments caractéristiques inclus dans la zone définie est inférieur à un entier (Nᵢ₁,Nᵢ₂,...,Nᵢₘ) déterminé, tandis que le nombre d'éléments caractéristiques inclus dans la zone détectée n'est pas inférieur audit entier déterminé pour l'individu donné.

9. Produit programme d'ordinateur comprenant des instructions de code pour mettre en oeuvre le procédé d'enrôlement selon l'une quelconque des revendications 1 à 4 et/ou le procédé de vérification biométrique selon la revendication 5 ou 6, lorsqu'il est chargé et exécuté sur des moyens informatiques.

## Patentansprüche

1. Verfahren zur Registrierung einer Person zu Zwecken der biometrischen Überprüfung, umfassend die folgenden Schritte:
- Erfassen eines Bilds (I) eines biologischen Attributs der Person, wobei das biologische Attribut eine Gruppe charakteristischer Elemente (10) beinhaltet;
- Definieren, in dem erfassten Bild, einer Vielzahl von Zonen (Z₁, Z₂, ..., Zₘ; 11, 12), die mindestens einen Teil des biologischen Attributs enthalten, wobei die Vielzahl von Zonen (Z₁, Z₂, ..., Zₘ; 11, 12) mindestens eine erste Zone und eine zweite Zone umfasst, wobei die erste Zone in der zweiten Zone enthalten ist;
- Speichern, in einer biometrischen Datenbank (7), einer ersten Information, die angibt, dass die Anzahl charakteristischer Elemente, die in der ersten Zone enthalten sind, kleiner als eine erste Ganzzahl ist, und einer zweiten Information, die angibt, dass die Anzahl charakteristischer Elemente, die in der zweiten Zone enthalten sind, kleiner als eine zweite Ganzzahl ist, wobei die zweite Ganzzahl größer als die erste Ganzzahl ist.

2. Verfahren nach Anspruch 1, wobei ein Bezugspunkt (13) in dem erfassten Bild (I) in Abhängigkeit von mindestens einem auffälligen Element (9) des biologischen Attributs positioniert wird, und in der Vielzahl von Zonen (11) relativ zu dem Bezugspunkt definiert wird.

3. Verfahren nach einem der Ansprüche 1 und 2, wobei für mindestens eine definierte Zone (11) mindestens eine Information in der biometrischen Datenbank (7) gespeichert wird, die angibt, dass die Anzahl charakteristischer Elemente, die in der Zone enthalten sind, Null beträgt.

4. Verfahren nach einem der Ansprüche 1 bis 3, umfassend ferner das Speichern einer Identität der Person in einer Identitätsdatenbank, wobei Verlinkungen zwischen der in der Identitätsdatenbank gespeicherten Identität und der ersten und zweiten Information vorgesehen sind.

5. Verfahren zur biometrischen Überprüfung, das eine biometrische Datenbank (14) verwendet, die während eines Registrierungsverfahrens nach einem der vorangehenden Ansprüche aufgebaut wird, wobei das Verfahren zur biometrischen Überprüfung die folgenden Schritte in Bezug auf eine bestimmte Person (P') umfasst:
- Erfassen eines Bildes (I') eines biologischen Attributs der bestimmten Person, wobei das biologische Attribut eine Gruppe charakteristischer Elemente beinhaltet;
- Detektieren, in dem erfassten Bild, mindestens einer Zone (Z'ᵢ₁, Z'ᵢ₂, ..., Z'ᵢₘ), die jeweils mindestens einer während des Registrierungsverfahrens definierten Zone (Zᵢ₁, Zᵢ₂, ..., Zᵢₘ) entspricht;
- Zählen der Anzahl (n'₁, n'₂, ..., n'ₘ) charakteristischer Elemente, die in der detektierten Zone enthalten sind,
- Schlussfolgern einer fehlenden Identität der bestimmten Person mit mindestens einer eingegliederten Person (Pᵢ), wenn die in der biometrischen Datenbank in Bezug auf die bestimmte Person gespeicherte Information angibt, dass die Anzahl charakteristischer Elemente, die in der definierten Zone enthalten sind, kleiner als eine bestimmte Ganzzahl (Nᵢ₁,Nᵢ₂, ..., Nᵢₘ) ist, wohingegen die Anzahl charakteristischer Elemente, die in der detektierten Zone enthalten sind, nicht kleiner als die für die bestimmte Person bestimmte Ganzzahl ist.

6. Verfahren nach Anspruch 5, wobei eine biometrische Datenbank (14) ferner andere Informationen speichert, die sich auf charakteristische Elemente (10) biologischer Attribute registrierter Personen beziehen, und wobei die biometrische Überprüfung ferner eine spätere Vergleichsphase zwischen mindestens einer entsprechenden Information, die sich auf charakteristische Elemente eines biologischen Attributs der bestimmten Person bezieht mit mindestens einer Information, die in der biometrischen Datenbank gespeichert ist, die sich auf mindestens eine Person bezieht, für welche zuvor nicht eine fehlende Identität mit der bestimmten Person geschlussfolgert wurde.

7. System oder Vorrichtung, eingerichtet, um ein Verfahren zur Registrierung einer Person zu Zwecken der biometrischen Überprüfung nach einem der Ansprüche 1 bis 4 durchzuführen, wobei das System oder die Vorrichtung aufweist:
- eine Erfassungseinheit, um ein Bild (I) eines biologischen Attributs der Person zu erfassen, wobei das biologische Attribut eine Gruppe charakteristischer Elemente (10) beinhaltet;
- eine Definitionseinheit, um in dem erfassten Bild eine Vielzahl von Zonen (Z₁, Z₂, ..., Zₘ; 11, 12) zu definieren, die mindestens einen Teil des biologischen Attributs enthalten; wobei die Vielzahl von Zonen (Z₁, Z₂, ..., Zₘ; 11, 12) mindestens eine erste Zone und eine zweite Zone umfasst, wobei die erste Zone in der zweiten Zone enthalten ist;
- eine biometrische Datenbank (7) zum Speichern einer ersten Information, die angibt, dass die Anzahl charakteristischer Elemente, die in der ersten Zone enthalten sind, kleiner als eine erste Ganzzahl ist, und einer zweiten Information, die angibt, dass die Zahl charakteristischer Elemente, die in der zweiten Zone enthalten sind, kleiner als eine zweite Ganzzahl ist, wobei die zweite Ganzzahl größer als die erste Ganzzahl ist.

8. System, das eingerichtet ist, um ein biometrisches Überprüfungsverfahren nach Anspruch 5 oder 6 durchzuführen, wobei das System oder die Vorrichtung in Bezug auf eine bestimmte Person (P') aufweist:
- eine Erfassungseinheit, um ein Bild (I) eines biologischen Attributs der bestimmten Person zu erfassen, wobei das biologische Attribut eine Gruppe charakteristischer Elemente beinhaltet;
- eine Detektionseinheit, um in dem erfassten Bild mindestens eine Zone (Z'ᵢ₁, Z'ᵢ₂, ..., Z'ᵢₘ) zu detektieren, die jeweils mindestens einer während des Registrierungsverfahrens definierten Zone (Zᵢ₁, Zᵢ₂, ..., Zᵢₘ) entspricht;
- eine Zähleinheit, um die Zahl (n'₁, n'₂, ..., n'ₘ) charakteristischer Elemente zu zählen, die in der detektierten Zone enthalten sind;
- eine Entscheidungseinheit, um auf eine Abwesenheit der Identität der bestimmten Person mit mindestens einer registrierten Person (Pᵢ) zu schlussfolgern, wenn die in der biometrischen Datenbank gespeicherte Information, die sich auf die registrierte Person bezieht, angibt, dass die Zahl charakteristischer Elemente, die in der festgelegten Zone enthalten ist, kleiner als eine bestimmte Ganzzahl (Nᵢ₁,Nᵢ₂, ..., Nᵢₘ) ist, wohingegen die Anzahl charakteristischer Elemente, die in der detektierten Zone enthalten sind, nicht kleiner als die für die bestimmte Person bestimmte Ganzzahl ist.

9. Computerprogrammprodukt, aufweisend Codeanweisungen für die Durchführung des Registrierungsverfahrens nach einem der Ansprüche 1 bis 4 und/oder des biometrischen Überprüfungsverfahrens nach Anspruch 5 oder 6, wenn es auf Computereinrichtungen geladen und ausgeführt wird.

## Claims

1. Method for enrolling an individual for biometric verification purposes, comprising the following steps:
- acquiring an image (I) of a biological attribute of said individual, said biological attribute including a set of characteristic elements (10);
- defining, within the acquired image, a plurality of areas (Z₁,Z₂,...,Zₘ; 11,12) including at least a portion of said biological attribute, wherein said plurality of areas (Z₁,Z₂,...,Zₘ; 11,12) comprises at least a first area and a second area, the first area being included in the second area;
- storing in a biometric database (7) a first piece of information indicating that the number of characteristic elements included in the first area is less than a first integer and a second piece of information indicating that the number of characteristic elements included in the second area is less than a second integer, the second integer being greater than the first integer.

2. Method according to claim 1, wherein a reference (13) is positioned in the acquired image (I) as a function of at least one noteworthy element (9) of the biological attribute, and wherein said area (11) is defined relative to said reference.

3. Method according to any of claims 1 or 2, wherein, for at least one defined area (11), the biometric database (7) stores at least one piece of information indicating that the number of characteristic elements included in said area is zero.

4. Method according to any of claims 1 to 3, additionally comprising the storing of an identity of said individual in an identity database, links being provided between said identity stored in the identity database and said first and second pieces of information.

5. Method of biometric verification using a biometric database (14) constructed during an enrollment procedure according to any one of the above claims, said method of biometric verification comprising the following steps relative to a given individual (P'):
- acquiring an image (I') of a biological attribute of the given individual, said biological attribute including a set of characteristic elements;
- detecting, in the acquired image, at least one area (Z'ᵢ₁,Z'ᵢ₂,...,Z'ᵢₘ) respectively corresponding to at least one area (Zᵢ₁,Zᵢ₂,...,Zᵢₘ) defined during the enrollment procedure;
- counting the number (n'₁,n'₂,...,n'ₘ) of characteristic elements included in said detected area;
- concluding that the given individual does not correspond to at least one enrolled individual (Pᵢ) when the information stored in the biometric database relative to the enrolled individual indicates that the number of characteristic elements included in the defined area is less than a predetermined integer (Nᵢ₁,Nᵢ₂,...,Nᵢₘ) but the number of characteristic elements included in the detected area is not less than said predetermined integer for the given individual.

6. Method according to claim 5, wherein a biometric database (14) additionally stores other information relative to characteristic elements (10) of biological attributes of the enrolled individuals, and wherein the biometric verification additionally comprises a later phase of comparison between at least one piece of corresponding information concerning characteristic elements of a biological attribute of the given individual with at least one piece of information stored in the biometric database relative to at least one individual for whom it has not been previously concluded that there is no match with the given individual.

7. System or device arranged to implement a method of enrolling an individual for the purposes of a biometric verification according to any one of claims 1 to 4, said system or device comprising:
- an acquisition unit for acquiring an image (I) of a biological attribute of said individual, said biological attribute including a set of characteristic elements (10);
- a definition unit for defining, within the acquired image, a plurality of areas (Z₁,Z₂,...,Zₘ ; 11,12) including at least a portion of said biological attribute; wherein said plurality of areas (Z₁,Z₂,...,Zₘ; 11,12) comprises at least a first area and a second area, the first area being included in the second area;
- a biometric database (7) for storing a first piece of information indicating that the number of characteristic elements included in the first area is less than a first integer and a second piece of information indicating that the number of characteristic elements included in the second area is less than a second integer, the second integer being greater than the first integer.

8. System or device arranged to implement a method of biometric verification according to claim 5 or 6, said system or device comprising, relative to a given individual (P') :
- an acquisition unit for acquiring an image (I') of a biological attribute of the given individual, said biological attribute including a set of characteristic elements;
- a detection unit for detecting, within the acquired image, at least one area (Z'ᵢ₁,Z'ᵢ₂,...,Z'ᵢₘ) respectively corresponding to at least one area (Zᵢ₁,Zᵢ₂,...,Zᵢₘ) defined during the enrollment procedure;
- a counting unit for counting the number (n'₁,n'₂,...,n'ₘ) of characteristic elements included in said detected area;
- a decision unit for concluding that the given individual does not correspond to at least one enrolled individual (Pᵢ), when the information stored in the biometric database relative to the enrolled individual indicates that the number of characteristic elements included in the defined area is less than a predetermined integer (Nᵢ₁,Nᵢ₂,...,Nᵢₘ) but the number of characteristic elements included in the detected area is not less than said predetermined integer for the given individual.

9. Computer program product comprising instructions for implementing the enrollment procedure according to any one of claims 1 to 4 and/or the biometric verification method according to claim 5 or 6, when it is loaded into and executed by computer means.
